# EUROPEAN PATENT SPECIFICATION

(11) **EP 1 745 658 B1**
(45) Date of publication and mention of the grant of the patent: **01.04.2015**
(21) Application number: 05741123.3
(22) Date of filing: 29.04.2005
(51) Int. Cl.: H04W 4/00, H04W 84/00

(54) **METHOD AND APPARATUS FOR CONTROLLING CELL SELECTION IN A CELLULAR COMMUNICATION SYSTEM**
VERFAHREN UND VORRICHTUNG ZUR STEUERUNG DER ZELLENAUSWAHL IN EINEM ZELLULAREN KOMMUNIKATIONSSYSTEM
PROCEDE ET APPAREIL DESTINE A COMMANDER LA SELECTION DE CELLULES DANS UN SYSTEME DE COMMUNICATION CELLULAIRE

(30) Priority: 05.05.2004 GB 0410007
(43) Date of publication of application: 24.01.2007
(73) Proprietor: Motorola Mobility LLC, Libertyville, IL 60048 (US)
(72) Inventor: MOLKDAR, Davood, Swindon, Wiltshire SN25 4XY (GB); THOMAS, Howard, Swindon, Wiltshire SN25 4XY (GB)
(74) Representative: Jepsen, René Pihl
(86) International application number: PCT/US2005/015140
(87) International publication number: WO 2005/109910

(56) References cited:
- EP-A2- 0 929 203
- WO-A1-99/13670
- WO-A1-99/51052
- WO-A2-01/47298
- US-A1- 2003 035 403
- US-B1- 6 381 235
- US-B1- 6 788 952
- US-B2- 6 542 742

## Description

### Field of the invention

The invention relates to an apparatus and method for controlling cell selection in a cellular communication system and in particular a cellular communication system supporting a plurality of modulation schemes.

### Background of the Invention

In a cellular communication system a geographical region is divided into a number of cells each of which is served by base station. The base stations are interconnected by a fixed network which can communicate data between the base stations. A mobile station is served via a radio communication link by the base station of the cell within which the mobile station is situated.

As a mobile station moves, it may move from the coverage of one base station to the coverage of another, i.e. from one cell to another. As the mobile station moves towards base station, it enters a region of overlapping coverage of two base stations and within this overlap region it changes to be supported by the new base station. As the mobile station moves further into the new cell, it continues to be supported by the new base station. This is known as a handover or handoff of a mobile station between cells.

A cellular communication system extends coverage over typically an entire country and comprises hundreds or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition, the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Currently, the most ubiquitous cellular communication system is the 2nd generation communication system known as the Global System for Mobile communication (GSM). GSM uses a technology known as Time Division Multiple Access (TDMA) wherein user separation is achieved by dividing frequency carriers into 8 discrete time slots, which individually can be allocated to a user. A base station may be allocated a single carrier or a multiple of carriers. One carrier is used for a pilot signal which further contains broadcast information. This carrier is used by mobile stations for measuring of the signal level of transmissions from different base stations, and the obtained information is used for determining a suitable serving cell during initial access or handovers. GSM uses a constant amplitude phase modulation scheme known as Gaussian Minimum Shift Keying (GMSK). Further description of the GSM TDMA communication system can be found in 'The GSM System for Mobile Communications' by Michel Mouly and Marie Bernadette Pautet, Bay Foreign Language Books, 1992, ISBN 2950719007.

To further enhance the services and performance of the GSM communication system, a number of enhancements and additions have been introduced to the GSM communication system over the years.

One such enhancement is the General Packet Radio System (GPRS), which is a system developed for enabling packet data based communication in a GSM communication system. Thus, the GPRS system is compatible with the GSM (voice) system and provides a number of additional services including provision of packet data communication, which augments and complements the circuit switched communication of a traditional communication system. Furthermore, the packet based data communication may also support packet based speech services. The GPRS system has been standardised as an add-on to an existing GSM communication system, and can be introduced to an existing GSM communication system by introducing new network elements. Specifically, a number of Serving GPRS Support Nodes (SGSN) and Gateway GPRS Support Nodes (GGSN) may be introduced to provide a packet based fixed network communication.

Another enhancement is the Enhanced Data rate for GSM Evolution (EDGE) system, which comprises an air interface transmission protocol using a number of techniques to provide higher throughput over the air interface. Specifically, EDGE utilises higher order modulation schemes (8-PSK modulation), channel adaptation, Automatic Repeat Request (ARQ) schemes and incremental redundancy to provide a high data throughput. Furthermore, EDGE is particularly suited for packet based communication over the air interface.

In particular, a radio access network known as a GERAN (GSM/EDGE Radio Access Network) has been standardised. The GERAN allows for traditional GSM services to be provided as well as the enhanced services and performance provided by EDGE and GPRS.

Currently, 3rd generation systems are being rolled out to further enhance the communication services provided to mobile users. The most widely adopted 3rd generation communication systems are based on Code Division Multiple Access (CDMA) wherein user separation is obtained by allocating different spreading and scrambling codes to different users on the same carrier frequency. The transmissions are spread by multiplication with the allocated codes thereby causing the signal to be spread over a wide bandwidth. At the receiver, the codes are used to de-spread the received signal thereby regenerating the original signal. Each base station has a code dedicated for a pilot and broadcast signal, and as for GSM this is used for measurements of multiple cells in order to determine a serving cell. An example of a communication system using this principle is the Universal Mobile Telecommunication System (UMTS), which is currently being deployed. Further description of CDMA and specifically of the Wideband CDMA (WCDMA) mode of UMTS can be found in 'WCDMA for UMTS', Harri Holma (editor), Antti Toskala (Editor), Wiley & Sons, 1091, ISBN 0471486876.

In a UMTS CDMA communication system, the communication network comprises a core network and a UMTS Radio Access Network (UTRAN). The core network is operable to route data from one part of the RAN to another, as well as interfacing with other communication systems. In addition, it performs many of the operation and management functions of a cellular communication system, such as billing. The RAN is operable to support wireless user equipment over a radio link being part of the air interface. The RAN comprises the base stations, which in UMTS are known as Node Bs, as well as Radio Network Controllers (RNC) which control the Node Bs and the communication over the air interface.

In order to increase the spectral efficiency, increase data rates, provide a variety of services and support a variety of equipment and standards, cellular communication systems increasingly support a number of different modulation schemes. Thus, in current and future wireless packet/circuit switched data and voice systems, one of the techniques used to offer variable rates is through varying the modulation scheme of the transmitted signal. In particular, an EDGE GSM communication system supports both GMSK modulation and 8-PSK modulation. Among other things, this allows EDGE capable mobile stations to utilise the additional features of EDGE while ensuring the legacy mobile stations may still be supported.

One issue that is generally encountered when adopting such a technique is that the hardware capability of the transmitters of base stations and handsets, in connection with the characteristics and requirements of the individual modulation schemes, results in the maximum transmit power of a base station being dependent on the selected modulation scheme.

For example, GMSK is a constant amplitude modulation scheme and is accordingly not sensitive to non-linearities of the transmit path, such as non-linearities occurring in the power amplifier. Accordingly, the power amplifier may be operated in a non-linear region and without backing off. This allows for the power amplifier to be used at a maximum output power level.

In contrast, 8-PSK is a non-constant amplitude linear modulation scheme which requires a substantially linear processing. Therefore, the power amplifier must be operated in a substantially linear region requiring a back off of typically around 4-5 dB. In order to reduce cost, the same power amplifier is used for both GMSK and 8-PSK and the maximum power transmitted for 8-PSK is consequently typically around 4-5 dB less than for GMSK. This may cause a significant variation in the transmitted power levels depending on the modulation schemes used.

In cellular communication systems, power level measurements of uplink or downlink signals are frequently used for cell selection procedures. However, as the transmitted power levels may depend on the modulation schemes used, the cell selection procedures are not optimal. The transmit power variations caused by the variations in modulation scheme may degrade the performance of the cell selection procedures and accordingly the load control and resource management may be less effective resulting in a reduced capacity of the communication system as a whole.

In particular, in an EDGE GSM communication system, cell selection is based on power level measurements of the BCCH carrier. The BCCH carrier is divided into eight time slots with one time slot reserved for broadcast of control information. The remaining seven time slots may be used for user traffic and may use GMSK or 8-PSK modulation schemes. The BCCH carrier is always transmitted at a maximum power level to provide large cell coverage and a suitable power reference for signal level measurements. However, as the maximum power level differs for different modulation schemes, the cell selection may be affected by the choice of modulation schemes in each time slot. This may complicate and degrade resource and cell load management.

For example, a BCCH of one cell supporting GMSK in seven time slots will have an average transmit power almost 4-5 dB higher than a BCCH of another cell supported by a base station having the same power amplifier characteristics but using 8-PSK in seven time slots. Thus, due to the difference in modulation schemes the mobile stations will be biased from the cell supporting EDGE towards the cell supporting GMSK. This may for example cause the EDGE cell to be underloaded while the GMSK cell is overloaded thereby reducing the capacity of the cellular communication system. Examples of cell selection approaches for cellular radio systems may be found in WO99/51052A1 and EP 0 929 203A2.

Hence, an improved system of cell selection would be advantageous and in particular a system allowing increased flexibility, improved cell selection control, improved insensitivity to dynamic variations, improved cell selection performance and/or increased capacity of a cellular communication system would be advantageous.

### Summary of the Invention

Accordingly, the Invention seeks to preferably mitigate, alleviate or eliminate one or more of the above mentioned disadvantages singly or in any combination.

According to a first aspect of the invention there is provided an apparatus for controlling cell selection in accordance with claim 1.

The invention may allow cell selection to take the modulation scheme distribution in the cellular communication system into account. The modulation scheme distribution is an indication of the modulation scheme utilisation in the cellular communication and may in particular reflect the modulation schemes used in the at least one cell.

The cell selection criterion may be optimised or improved for the modulation scheme utilisation. This may result in improved cell selection performance and/or may allow more reliable and/ or accurate control of the cell selection procedures. The resource management may be improved and in particular the management and control of the loading of cells may be improved. This may reduce the probability of overloaded cells and may increase the capacity of the cellular communication system and improve the user service. For example, the number of dropped calls or access denials in the communication system may be reduced. In particular, the invention may compensate or offset a bias in the cell selection performance due to the used modulation schemes.

According to a preferred feature of the invention, the plurality of communication channels are communication channels of a single carrier.

This may provide a flexible and targeted modification of a cell selection criterion in response to the characteristics of a specific carrier. In particular, the carrier may be a carrier which is monitored by a cell selection procedure. The carrier may for example be a frequency carrier of a TDMA system such as GSM.

According to a preferred feature of the invention, the plurality of communication channels are communication channels of a pilot carrier. Cell selection is in many cellular communication systems based on signal level measurements of a pilot carrier and modifying the cell selection criterion in response to a modulation scheme distribution associated with the pilot carrier may provide improved cell selection performance and may in particular compensate or offset undesired biasing of cells due to the specific modulation schemes used. For an EDGE GSM cellular communication system, the pilot carrier may in particular be the BCCH carrier.

According to a preferred feature of the invention, the plurality of communication channels are communication channels supporting an active communication. An active communication may in particular be a communication which has been ongoing during a time interval for which the modulation scheme distribution has been determined. The modulation scheme distribution may specifically reflect a current modulation scheme distribution for a given time interval. The invention may thus provide for a dynamic modification of the cell selection criterion in response to the current modulation scheme utilisation. This may provide for an improved cell selection performance. It may alternatively or additionally facilitate network resource management as short term variations may automatically be compensated by the modification of the cell selection criterion.

The means for modifying is operable to modify the cell selection criterion in response to a power characteristic associated with each modulation scheme. The power characteristic may be a parameter or a requirement associated with the modulation scheme, such as for example a peak to average power level measure. This may provide improved accuracy and improved cell selection performance.

According to a preferred feature of the invention, the power characteristic is a linearity requirement. In particular, the power characteristic is preferably a power back-off requirement of a power amplifier. Typically, the power amplifier back-off required for different modulation schemes will result in transmit power variations between these, and modifying the cell selection criterion in response to these parameters may improve cell selection and in particular compensate or offset the bias introduced by the modulation schemes.

According to a preferred feature of the invention, the means for modifying a cell selection criterion is operable to determine a cell selection power offset for a signal level measurement. This provides a particularly advantageous means of modifying the cell selection criterion. In particular, it allows easy implementation, provides high cell selection performance and/or is suitable for cellular systems wherein cell selection is in response to signal level measurements in the remote units. In EDGE GSM, the signal level measurements may particularly be mobile measurements of the received BCCH signal level.

According to a preferred feature of the invention, the apparatus further comprises means for transmitting cell selection criterion modification information to remote units. This is particularly advantageous where cell selection is performed by the remote unit. The cell selection criterion modification information may specifically be cell selection power offsets to be applied to signal level measurements made by the remote unit and used for selecting a cell.

According to a preferred feature of the invention, the apparatus further comprises: means for determining a long term modulation scheme distribution for the plurality of communication channels, the long term modulation scheme distribution reflecting a distribution of modulation scheme usage determined over a longer time interval than for the modulation scheme distribution; means for determining a default cell selection criterion; and the means for modifying the cell selection criterion is operable to temporarily modify a parameter of the default cell selection criterion.

This may allow a high performance cell selection algorithm and/or facilitate implementation. For example, a default cell selection criterion may be determined to suit the average conditions in the cellular communication system and this may be dynamically varied to suit the dynamic variations in modulation scheme utilisation.

According to a preferred feature of the invention, the means for modifying is further operable to modify the cell selection criterion in response to a loading of the cell. This may improve cell selection and provide additional control of the resource distribution between cells.

According to a preferred feature of the invention, the means for modifying is further operable to modify the cell selection criterion in response to a loading of a different cell of the cellular communication system. This may improve cell selection and provide additional control of the resource distribution between cells.

According to a preferred feature of the invention, the modulation scheme distribution is determined for a plurality of cells. This may improve cell selection and provide additional control of the resource distribution between cells.

According to a preferred feature of the invention, the means for determining the modulation scheme distribution is operable to determine the modulation scheme distribution in response to a number of active communications employing each supported modulation scheme. This may allow a simple and easy to implement way of determining a modulation scheme distribution suitable for modifying the cell selection criterion thereby improving the cell selection performance.

According to a preferred feature of the invention, the modulation scheme distribution comprises a plurality of modulation scheme categories and an indication of a current usage level of the modulation schemes of each category. This may provide a simple modulation scheme distribution representing the current modulation scheme utilisation and is suitable for modifying the cell selection criterion thereby improving the cell selection performance.

According to a preferred feature of the invention, the cell selection criterion is an idle mode cell selection criterion. The invention may provide improved idle mode cell selection performance thereby improving the performance of the cellular communication system as a whole.

According to a preferred feature of the invention, the cell selection criterion is a handover criterion. The invention may provide improved handover cell selection performance thereby improving the performance of the cellular communication system as a whole.

Preferably, the cellular communication system comprises EDGE communication means. The cellular communication system preferably comprises a GERAN (GSM EDGE Radio Access Network). In particular the cellular communication system may be an EDGE GSM cellular communication system.

Preferably the cellular communication system comprises a first and second apparatus as described above and further comprising means for exchanging modulation scheme distribution information. This may provide a suitable way of communicating information allowing a modification of the cell selection criterion in response to the modulation scheme distribution of a plurality of cells.

According to a second aspect of the invention, there is provided a method of controlling cell selection in in accordance with claim 21.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 is an illustration of part of a cellular communication system in accordance with an embodiment of the invention; and
FIG. 2 illustrates a method of controlling cell selection in accordance with an embodiment of the invention.

### Detailed Description of a Preferred Embodiment of the Invention

The following description focuses on an embodiment of the invention applicable to an EDGE GSM cellular communication system. However, it will be appreciated that the invention is not limited to this application but may be applied to many other cellular communication systems supporting a plurality of modulation schemes such as a combined 2^{nd} and 3^{rd} Generation cellular communication system.

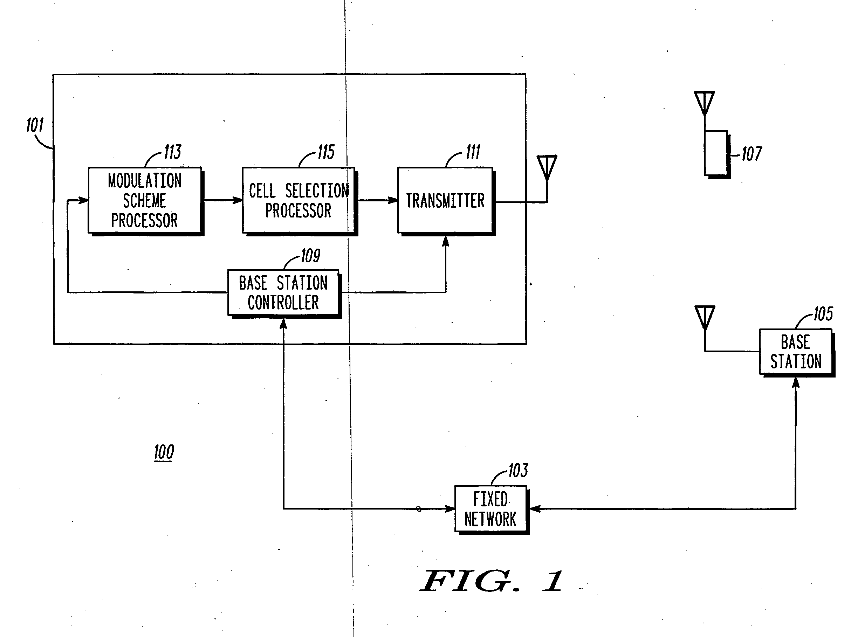

FIG. 1 is an illustration of part of a cellular communication system 100 in accordance with an embodiment of the invention.

FIG. 1 illustrates a first base station 101 comprising an apparatus for controlling cell selection in accordance with an embodiment of the invention. Only the parts of the base station 101 associated with the cell selection apparatus have been illustrated, and it will be apparent to the person skilled in the art that the base station 101 additionally comprises the required functionality for operating in accordance with the specifications of the cellular communication system. The base station 101 is connected to a fixed network 103 which is further connected to other base stations of which one neighbour base station 105 is shown. FIG. 1 further illustrates a remote unit 107 which is in idle mode and situated in a location where it is able to receive signals from both the first base station 101 and the neighbour base station 105.

The first base station 101 comprises a base station controller 109 which is operable to control the operation of the base station. In particular, the base station controller 109 interfaces with the fixed network 103 and controls the base station 101 to transmit user data and control messages in accordance with the requirements of the EDGE GSM cellular communication system.

The base station controller 109 is coupled to a transmitter 111 which transmits signals to the remote units 107 over the EDGE GSM air interface in accordance with the EDGE GSM technical specifications. In particular the transmitter 111 is under the control of the base station controller 109 operable to transmit data using different modulation schemes. The modulation scheme used in each time slot depends on the service supported by that time slot and may also depend on the current propagation conditions. If a time slot is used to support a GSM communication, the transmitter uses GMSK modulation whereas a time slot supporting an EDGE communication may use an 8-PSK modulation scheme.

The transmitter 111 comprises a power amplifier which amplifies the modulated signal to a suitable power level for transmission. For the constant amplitude modulation of GMSK, the power amplifier may be used up to the maximum output power that can be provided by the power transmitter. However, for the linear non-constant amplitude modulation of 8-PSK, it is important that the power amplifier is used in a substantially linear region. This requires that the power amplifier is backed off and typically a back off of around 4 to 5 dBs are required. Accordingly, the maximum power output of the power amplifier is around 4-5 dB lower for 8-PSK than for GMSK.

In an EDGE GSM cellular communication system, the BCCH carrier is used as a pilot signal. The received signal level of the BCCH carrier is measured by the remote units and is used to determine a serving cell. In particular, idle mode mobiles measure the received BCCH signal levels of a number of base stations and select the cell being received with the highest signal level as the serving cell. Active remote units measure signal levels of a number of neighbouring cells and report these back to the base station and the fixed network for determining if a handover to another cell should be carried out. Hence, the remote unit 107 measures the BCCH signal from base station 101 and base station 103 and cell selection is performed in response to these measurements in accordance with a suitable cell selection criterion. In the idle mode case, the remote unit 107 may simply select the base station having the highest received signal level.

In order to provide a suitable reference signal, power control is not performed on the BCCH carrier which instead is transmitted at the maximum power level available from the base station. However, when different modulation schemes are used by the base station 201, the differences in the required back-off between constant amplitude and non-constant amplitude modulation schemes result in the average transmit power being dependent on the modulation schemes used.

As a specific example, the base station controller 109 may control the transmitter 111 to transmit a GMSK modulated signal in all time slots of the BCCH carrier in which case the average transmit power within the measurement time interval of the remote unit (typically around five seconds) is the maximum power level of the power amplifier. However, at another time, seven out of eight time slots of the BCCH carrier which are available for user traffic may support EDGE communications using 8-PSK. Accordingly, the power amplifier will be backed off by 4-5 dBs for seven out of the eight time slots, resulting in the received signal level at the remote unit 107 being reduced by around 4 dB. Thus, the transmit power level of the BCCH carrier may fluctuate in response to the applied modulation schemes resulting in a reduced performance of the cell selection process.

The variation in transmit power of the BCCH can furthermore complicate resource management and reduce the capacity of the cellular communication system. For example, cells having a high number of EDGE communications supported by the BCCH will be measured with a lower signal level than if the cell supported fewer EDGE communications. This will tend to shift remote units away from EDGE supporting cells which may result in the cell being under loaded while neighbour cells are overloaded.

The base station 101 of FIG. 1 further comprises a modulation scheme processor 113 which is operable to determine a modulation scheme distribution for a plurality of communication channels of the cell of the base station. The modulation scheme processor 113 is coupled to a cell selection processor 115 which is operable to modify a cell selection criterion in response to the modulation scheme distribution. In the described embodiment, the cell selection processor 115 is coupled to the transmitter 111 in order to transmit information of the modifications to the cell selection criterion to the remote units of the cell. The information of the modifications of the cell selection criterion may be communicated on the BCCH broadcast channel thereby being broadcast to all remote units capable of receiving the BCCH signal.

The modulation scheme processor 113 may determine the modulation scheme distribution in accordance with any suitable method or algorithm. The modulation scheme distribution is an indication of the modulation scheme utilisation. In particular, the modulation scheme distribution reflects which modulation schemes are currently active or which modulation schemes are allocated to different time slots, channels and/or carriers. Specifically, the modulation scheme distribution may be an indication of the modulation scheme utilisation which allows for the impact on the transmit power of a base station to be determined.

The cell selection processor 115 may determine a modification to a cell selection criterion which takes into account the modulation scheme utilisation, and in particular the cell selection criterion may be modified to compensate for a change in the transmit power of a base station caused by the modulation schemes used. It will be appreciated that any suitable cell selection criterion or modification thereof may be used without detracting from the invention. For example, a cell selection algorithm may comprise a number of alternative conditions for selecting a cell and the modification of the cell selection criterion may be achieved by selecting a specific condition to apply for cell selection. In other embodiments, a parameter or relationship used by the cell selection algorithm may be modified in response to the modulation scheme distribution.

Hence, the embodiment may allow a cell selection criterion to be modified to compensate for variations in the modulation schemes used. This may improve cell selection performance, enhance and facilitate the control of the cell selection and increase the capacity of the communication system as a whole.

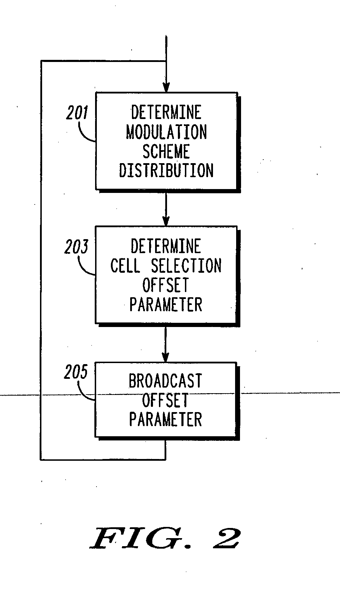

A specific example of the operation of the EDGE GSM communication system, wherein power variations of the BCCH carrier are compensated, will be described in the following. FIG. 2 illustrates a method of controlling cell selection in accordance with an embodiment of the invention. The method is in the following example performed by the base station 101 of FIG. 1 and will be described with reference to this. The example is suitable for a cell selection algorithm for idle mode remote units where the cell selection criterion is applied by the remote unit and is based on BCCH signal level measurements made by the remote unit. Specifically, the remote unit may select the cell having the highest received signal level after compensation.

In the example, the modulation scheme processor 113 determines a modulation scheme distribution in step 201. The modulation scheme distribution is determined in response to the communication channels of a single carrier and specifically the modulation scheme distribution is determined for the pilot carrier in the form of the BCCH carrier.

In addition, the modulation scheme distribution is determined to reflect the current dynamic conditions and is thus determined for the communication channels supporting an active communication. Thus, the modulation scheme distribution is determined by evaluating which modulation schemes are used in the time slots of the BCCH carrier.

Furthermore, the modulation scheme distribution is determined in response to a number of active communications employing each supported modulation scheme. The modulation scheme distribution of the described embodiment comprises a plurality of modulation scheme categories. As a simple example, the modulation scheme of each time slot is either a GMSK modulation scheme or an 8-PSK modulation scheme and the modulation scheme distribution therefore simply comprises a first category corresponding to GMSK modulation and a second category corresponding to 8-PSK modulation.

In the example, the modulation scheme distribution comprises an indication of a current usage level of the modulation schemes of each category and in particular the modulation scheme distribution comprises an indication of the number of time slots currently using GMSK and the number of time slots currently using 8-PSK.

As a specific example, the BCCH carrier may use GMSK for the control time slot 0, 8-PSK in time slots 1 to 4 and GMSK in time slot 5 to 7. The modulation scheme processor 113 will be provided with this information from the base station controller 209 and will accordingly generate a modulation scheme distribution indicating that 4 time slots fall in the GMSK category and 4 time slots fall in the 8-PSK category.

Step 201 is followed by step 203 wherein the cell selection processor 115 determines a modification to the cell selection criterion. In the example, the modification is effected by setting a cell selection power offset. The cell selection power offset corresponds to an offset which is to be applied to the signal level measurements of the BCCH carrier performed by the remote unit 107.

In the example, the cell selection processor 115 determines the cell selection power offset in response to the modulation scheme distribution and a power characteristic associated with each modulation scheme. The power characteristic is in this example a characteristic which is indicative of the transmit power that is used for the specific modulation scheme. In the specific embodiment, the power reduction of the transmit power depends on the linearity required by the power amplifier. Typically, the higher the linearity requirement for a modulation scheme the higher the required back off of the transmit power amplifier and thus the lower the maximum transmit power.

As a specific example, the cell selection processor 115 may have information that for a GMSK signal no back-off is required whereas for an 8-PSK signal a back off of 6 dB is required in order to meet the linearity requirement for the non-constant amplitude modulation scheme. Hence, when receiving a modulation scheme distribution from the modulation scheme processor 113 indicating that the BCCH carrier uses GMSK in four time slots and QPSK in four time slots, the cell selection processor 115 determines that the power amplifier is backed off by 6 dB, and thus that the output power is reduced by 6 dB for half the duration. Thus, the average transmit power is 3 dB lower than the transmit power if all time slots use GMSK modulation. Hence, the cell selection processor 115 determines a cell selection power offset of 3 dB which is to be applied to measurements of the BCCH carrier of base station 101 made by the remote unit 107.

Step 203 is followed by step 205 wherein the cell selection power offset is fed from the cell selection processor 115 to the transmitter 111 for transmission to the remote units. Thus, the base station 201 transmits cell selection criterion modification information in the form of the cell selection power offset to remote units. In particular, the base station may broadcast the cell selection power offset by including it in a system information message of the BCCH carrier.

In the example, the remote unit 107 is in idle mode and performs a cell selection in response the received signal level measurements of the BCCH carriers of the surrounding base stations. In particular, the remote unit receives the BCCH carrier of the first and second base station 101, 103 and measures the signal level averaged over a time interval (e.g. 5 seconds). In addition, the remote unit demodulates time slot 0 of the BCCH carriers and decodes the transmitted system information messages. The system information messages from the first base station comprises the cell selection power offset and the remote unit adds the cell selection power offset to the measured signal level of the first base station 101. Thus, 3 dB is in the specific example added to the signal level measurement of the first base station 101 thereby compensating for the reduction of transmit power caused by the use of 8-PSK modulation in four time slots.

In the embodiment, the signal level measurements are compensated for transmit power variations caused by the use of different modulation schemes and cell selection may be performed on the basis of the compensated signal levels. In particular, the remote unit may select the base station resulting in the highest compensated signal level corresponding to the lowest propagation loss. Thus, improved cell selection may be achieved.

In the described embodiment, a default cell selection criterion consisting in selecting the cell having the highest received signal level is modified by dynamically compensating the measured signal levels in response to the current modulation scheme distribution. Thus, a default cell selection criterion based on an assumption of a maximum transmit power is temporarily modified by introducing a cell selection power offset representing transmit power variations due to the actual modulation schemes used.

In some embodiments, the default cell selection criterion is not simply based on a static assumption but is based on a long term evaluation of the modulation scheme distribution. Thus, the base station 201 may in such an embodiment comprise means for determining a long term modulation scheme distribution. The long term modulation scheme distribution is determined over a longer time interval than for the modulation scheme distribution determined by the modulation scheme processor 113. In particular, the long term modulation scheme distribution may be determined by averaging the modulation scheme distribution over a suitable time interval. For example, a new modulation scheme distribution may be determined at ten minute intervals whereas the long term modulation scheme distribution may be determined on a daily or weekly basis.

In the embodiment, the long term modulation scheme distribution thus reflects the long term average modulation scheme utilisation whereas the modulation scheme distribution reflects the short term variations. The base station may in response to the long term modulation scheme distribution determine a default cell selection criterion suitable for the average conditions. For example, the default cell selection criterion may be a comparison between measured signal levels assuming a transmit power equal to the average transmit power for the long term modulation scheme distribution. The base station may further vary this temporarily in response to the modulation scheme distribution, for example by applying temporary cell selection power offsets.

It will be appreciated that the cell selection processor 115 may consider other parameters or characteristics when modifying the cell selection criterion than the modulation scheme distribution.

For example, in some embodiments, the cell selection processor 115 may further modify the cell selection criterion in response to a loading of the cell and/or of other cells.

In a specific such embodiment, the cell selection criterion is only modified if the cell or one of the surrounding cells is loaded above a given level. Thus, in situations where no cell is in danger of being overloaded, no modification is made to the cell selection criterion as this is unlikely to be critical or result in reduced performance. However, in situations where the cell selection is critical because one or more of the involved cells may be approaching congestion, a more accurate cell selection criterion may be used which more closely reflects the actual conditions and therefore provides an improved cell selection.

In the described embodiment, the modulation scheme distribution was determined only for one cell. However, it will be appreciated that in other embodiments, the modulation scheme distribution may reflect the modulation scheme utilisation of a plurality of cells.

For example, the modulation scheme processor 113 may receive information from other base stations indicating which modulation schemes are used in the time slots of the BCCH carriers of those cells. The modulation scheme distribution may for example comprise information that in base station 101 four time slots use GMSK and four time slots use 8-PSK and that in the second base station 103 six time slots use GMSK and two time slots use 8-PSK. In response, the cell selection processor 115 may for example determine a cell selection power offset reflecting the average transmit power difference between the first base station 101 and the second base station 105 rather than a relative offset to the maximum transmit power of the base station itself. Hence, in the example, a cell selection power offset of 1.8 dB may be transmitted to the remote unit 107 to be applied when comparing the signal level measurements of the first and second base station.

Furthermore, in some embodiments different cells may autonomously determine suitable cell selection power offsets and transmit these. For example, in an EDGE GMSK systems the remote units decode the BCCH of not only the serving cell but also of the neighbour cells being monitored. In this case, each base station may determine a suitable cell selection power offsets for the cell supported by the base station and may transmit this information on the BCCH. The remote unit will thus receive suitable cell selection power offsets from the neighbour cells and may apply these to the appropriate BCCH signal level measurements.

In some embodiments, only the pilot signal of the currently selected cell is decoded. For example, for packet communication using a PBCCH (Packet BCCH), the remote unit decodes only that of the serving cell and the neighbour cell data is broadcast on the PBCCH of the serving cell. In this embodiment, neighbouring cells may exchange information related e.g. to the cell selection power offsets of the cells and the cell selection power offsets for both the serving cell and neighbouring cells may be broadcast on the PBCCH of the serving cell.

The above description has focussed on an embodiment wherein an idle mode remote unit performs cell selection in response to measurements and information transmitted from a base station. However, it will be appreciated that the cell selection may be performed at other locations and in particular may be performed in the network. Thus, not only the cell selection processor modifying the cell selection criterion but also the cell selection algorithm itself may be performed in the network. The cell selection may thus be performed in the base station, in the fixed network or may be distributed between these.

For example, the cell selection may be a handover cell selection performed in a BSC based on measurements of BCCHs made by the remote unit 107 and transmitted to the base station 101. In such an example, each base station may comprise a modulation scheme processor 113 determining a current modulation scheme distribution and reporting this to the BSC. The BSC may then proceed to offset all neighbour measurements from the remote unit 107 by a value indicative of the transmit power reduction due to the modulation schemes used of the individual base station. Hence, an improved handover performance may be achieved.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. An apparatus for controlling cell selection in a cellular communication system supporting a plurality of modulation schemes, the apparatus comprising:
means (113) for determining a distribution of active modulations for a plurality of communication channels of at least one cell;
wherein the distribution of active modulations reflects which modulation schemes are currently active or which modulation schemes are allocated to different line slots, channels and/or carriers, and
means (115) for modifying a cell selection criterion in response to a power characteristic associated with each modulation scheme of the distribution of active modulations.

2. An apparatus as claimed in claim 1 wherein the plurality of communication channels are communication channels of a single carrier.

3. An apparatus as claimed in any preceding claim wherein the plurality of communication channels are communication channels of a pilot carrier.

4. An apparatus as claimed in any previous claim wherein the plurality of communication channels are communication channels supporting an active communication.

5. An apparatus as claimed in claim 4 wherein the power characteristic is a linearity requirement.

6. An apparatus as claimed in claim 5 wherein the power characteristic is a power back-off requirement of a power amplifier.

7. An apparatus as claimed in any previous claim wherein the means (115) for modifying a cell selection criterion is operable to determine a cell selection power offset for a signal level measurement.

8. An apparatus as claimed in any previous claim further comprising means (111) for transmitting cell selection criterion modification information to remote units.

9. An apparatus as claimed in any previous claim further comprising
means for determining a long term modulation scheme distribution for the plurality of communication channels, the long term modulation scheme distribution reflecting a distribution of modulation scheme usage determined over a longer time interval than for the distribution of active modulations;
means for determining a default cell selection criterion; and
wherein the means for modifying the cell selection criterion is operable to temporarily modify a parameter of the default cell selection criterion.

10. An apparatus as claimed in any previous claim wherein the means (115) for modifying is further operable to modify the cell selection criterion in response to a loading of the cell.

11. An apparatus as claimed in any previous claim wherein the means (115) for modifying is further operable to modify the cell selection criterion in response to a loading of a different cell than the at least one cell of the cellular communication system.

12. An apparatus as claimed in any previous claim wherein the distribution of active modulations is determined for a plurality of cells.

13. An apparatus as claimed in any previous claim wherein the means (113) for determining the distribution of active modulations is operable to determine the distribution of active modulations in response to a number of active communications employing each supported modulation scheme.

14. An apparatus as claimed in any previous claim wherein the distribution of active modulations comprises a plurality of modulation scheme categories and an indication of a current usage level of the modulation schemes of each category.

15. An apparatus as claimed in any previous claim wherein the cell selection criterion is an idle mode cell selection criterion.

16. An apparatus as claimed in any previous claim wherein the cell selection criterion is a handover criterion.

17. An apparatus as claimed in any previous claim wherein the cellular communication system comprises EDGE communication means.

18. A base station for a cellular communication system comprising an apparatus as claimed in any of the previous claims 1 to 17.

19. A cellular communication system comprising a first apparatus as claimed in any of the previous claims 1 to 17.

20. A cellular communication system as claimed in claim 19 wherein the cellular communication system comprises a second apparatus as claimed in any of the previous claims 1 to 18 and wherein the first and second apparatus furthermore comprise means for exchanging modulation scheme distribution information.

21. A method of controlling cell selection in a cellular communication system supporting a plurality of modulation schemes, the method comprising the steps of:
determining a distribution of active modulations for a plurality of communication channels of at least one cell wherein the distribution of active modulations reflects which modulation schemes are currently active or which modulation schemes are allocated to different line slots, channels and/or carriers,; and
modifying a cell selection criterion in response to a power characteristic associated with each modulation scheme of the distribution of active modulations.

22. A computer program comprising computer program code means adapted to perform the steps of the method of claim 21 when said program is run on a computer.

23. A carrier medium carrying the computer executable program of claim 22.

## Patentansprüche

1. Vorrichtung zum Steuern der Zellauswahl in einem zellularen Kommunikationssystem, welches mehrere Modulationsarten unterstützt, wobei die Vorrichtung folgendes aufweist:
Mittel (113) zum Bestimmen einer Verteilung aktiver Modulationen für mehrere Kommunikationskanäle von wenigstens einer Zelle, wobei die Verteilung aktiver Modulationen widerspiegelt, welche Modulationsarten momentan aktiv sind oder welche Modulationsarten verschiedenen Zeitschlitzen, Kanälen, und/oder Trägern zugewiesen sind; und
Mittel (115) zum Modifizieren eines Zellauswahlkriteriums in Antwort auf ein Leistungsmerkmal, welches jeder Modulationsart der Verteilung aktiver Modulationen zugeordnet ist.

2. Vorrichtung nach Anspruch 1, wobei die mehreren Kommunikationskanäle Kommunikationskänale eines einzigen Trägers sind.

3. Vorrichtung nach einem der vorangehenden Ansprüche, wobei die mehreren Kommunikationskanäle Kommunikationskanäle eines Pilotträgers sind.

4. Vorrichtung nach einem der vorangehenden Ansprüche, wobei die mehreren Kommunikationskanäle Kommunikationskanäle sind, die eine aktive Nachricht unterstützen.

5. Vorrichtung nach Anspruch 4, wobei das Leistungsmerkmal ein Linearitätserfordernis ist.

6. Vorrichtung nach Anspruch 5, wobei das Leistungsmerkmal ein Leistungsdrosselungserfordernis eines Leistungsverstärkers ist.

7. Verfahren nach einem der vorangehenden Ansprüche, wobei die Mittel (115) zum Modifizieren eines Zellauswahlkriteriums betrieben werden können, um ein Zellauswahlleistungsoffset für eine Signalpegelmessung zu bestimmen.

8. Vorrichtung nach einem der vorangehenden Ansprüche, die außerdem Mittel (111) zum Übertragen von Zellauswahlkriteriummodifikationsinformationen an entfernte Einheiten umfasst.

9. Vorrichtung nach einem der vorangehenden Ansprüche, die außerdem folgendes umfasst:
Mittel zum Bestimmen einer langfristigen Modulationsartverteilung für die mehreren Kommunikationskanäle, wobei die langfristige Modulationsartverteilung eine Verteilung einer Modulationsartverwendung widerspiegelt, die während eines längeren Zeitintervalls als für die Verteilung aktiver Modulationen bestimmt wurde;
Mittel zum Bestimmen eines Standardzellauswahlkriteriums; und
wobei die Mittel zum Modifizieren des Zellauswahlkriteriums betrieben werden können, um einen Parameter des Standardzellauswahlkriteriums vorrübergehend zu modifizieren.

10. Vorrichtung nach einem der vorangehenden Ansprüche, wobei die Mittel (115) zum Modifizieren außerdem betrieben werden können, um das Zellauswahlkriterium in Antwort auf eine Belastung der Zelle zu modifizieren.

11. Vorrichtung nach einem der vorangehenden Ansprüche, wobei die Mittel (115) zum Modifizieren außerdem betrieben werden können, um das Zellauswahlkriterium in Antwort auf eine Belastung einer anderen Zelle als der wenigstens einen Zelle des zellularen Kommunikationssystems zu modifizieren.

12. Vorrichtung nach einem der vorangehenden Ansprüche, wobei die Verteilung aktiver Modulationen für mehrere Zellen bestimmt wird.

13. Vorrichtung nach einem der vorangehenden Ansprüche, wobei die Mittel (113) zum Bestimmen der Verteilung aktiver Modulationen betrieben werden können, um die Verteilung aktiver Modulationen in Antwort auf eine Anzahl von aktiven Nachrichten, die jede unterstützte Modulationsart verwenden, zu bestimmen.

14. Vorrichtung nach einem der vorangehenden Ansprüche, wobei die Verteilung aktiver Modulationen mehrere Kategorien von Modulationsarten und eine Anzeige eines aktuellen Nutzungspegels der Modulationsarten jeder Kategorie umfasst.

15. Vorrichtung nach einem der vorangehenden Ansprüche, wobei das Zellauswahlkriterium ein Zellauswahlkriterium eines untätigen Modus ist.

16. Vorrichtung nach einem der vorangehenden Ansprüche, wobei das Zellauswahlkriterium ein Übergabekriterium ist.

17. Vorrichtung nach einem der vorangehenden Ansprüche, wobei das zellulare Kommunikationssystem EDGE-Kommunikationsmittel umfasst.

18. Basisstation für ein zellulares Kommunikationssystem, die eine Vorrichtung nach einem der vorangehenden Ansprüchen 1 bis 17 aufweist.

19. Zellulares Kommunikationssystem mit einer ersten Vorrichtung nach einem der vorangehenden Ansprüche 1 bis 17.

20. Zellulares Kommunikationssystem nach Anspruch 19, wobei das zellulare Kommunikationssystem eine zweite Vorrichtung nach einem der vorangehenden Ansprüche 1 bis 18 umfasst und wobei die erste und die zweite Vorrichtung außerdem Mittel zum Austauschen von Modulationsartverteilungsinformationen umfassen.

21. Verfahren zum Steuern der Zellauswahl in einem zellularen Kommunikationssystem, welches mehrere Modulationsarten unterstützt, wobei das Verfahren die folgenden Schritte aufweist:
Bestimmen einer Verteilung aktiver Modulationen für mehrere Kommunikationskanäle von wenigstens einer Zelle, wobei die Verteilung aktiver Modulationen widerspiegelt, welche Modulationsarten momentan aktiv sind oder welche Modulationsarten verschiedenen Zeitschlitzen, Kanälen, und/oder Trägern zugewiesen sind; und
Modifizieren eines Zellauswahlkriteriums in Antwort auf ein Leistungsmerkmal, welches jeder Modulationsart der Verteilung aktiver Modulationen zugeordnet ist.

22. Computerprogramm mit Computerprogrammcodemitteln, die dazu eingerichtet sind, die Schritte des Verfahrens nach Anspruch 21 auszuführen, wenn das Programm auf einem Computer ausgeführt wird.

23. Trägermedium, welches das computerausführbare Programm nach Anspruch 22 trägt.

## Revendications

1. Dispositif pour commander la sélection de cellule dans un système de communication cellulaire convenant à plusieurs systèmes de modulation, le dispositif comprenant:
des moyens (113) pour déterminer une distribution de modulations actives pour plusieurs voies de communication d'au moins une cellule, la distribution de modulations actives reflétant quels systèmes de modulation sont actuellement actifs ou quels systèmes de modulation sont affectés à des créneaux temporels différents, à des voies différentes et/ou à des porteuses différentes; et
des moyens (115) pour modifier un critère de sélection de cellule en réponse à une caractéristique de puissance associée avec chaque système de modulation de la distribution de modulations actives.

2. Dispositif selon la revendication 1, les plusieurs voies de communication étant des voies de communication d'une seule porteuse.

3. Dispositif selon l'une des revendications précédentes, les plusieurs voies de communication étant des voies de communication d'une porteuse pilote.

4. Dispositif selon l'une des revendications précédentes, les plusieurs voies de communication étant des voies de communication convenant à une communication active.

5. Dispositif selon la revendication 4, la caractéristique étant une exigence de linéarité.

6. Dispositif selon la revendication 5, la caractéristique de puissance étant une exigence de repli de puissance d'un amplificateur de puissance.

7. Dispositif selon l'une des revendications précédentes, les moyens (115) pour modifier un critère de sélection de cellule pouvant être employés à déterminer un décalage de puissance de sélection de cellule pour un mesurage du niveau de signal.

8. Dispositif selon l'une des revendications précédentes, comportant en plus des moyens (111) pour transmettre des informations de modification de critère de sélection de cellule à des unités distantes.

9. Dispositif selon l'une des revendications précédentes, comportant en plus:
des moyens pour déterminer une distribution de systèmes de modulation à long terme pour les plusieurs voies de communication, la distribution de systèmes de modulation à long terme reflétant une distribution d'usage de systèmes de modulation déterminée pendant un intervalle temporel plus long que pour la distribution de modulations actives;
des moyens pour déterminer un critère de sélection de cellule par défaut;
les moyens pour modifier le critère de sélection de cellule pouvant être employés pour modifier temporairement un paramètre du critère de sélection de cellule par défaut.

10. Dispositif selon l'une des revendications précédentes, les moyens (115) pour modifier pouvant être employés en plus pour modifier le critère de sélection de cellule en réponse à un chargement de la cellule.

11. Dispositif selon l'une des revendications précédentes, les moyens (115) pour modifier pouvant être employés en plus pour modifier le critère de sélection de cellule en réponse à un chargement d'une cellule différente de l'au moins une cellule du système de communication cellulaire.

12. Dispositif selon l'une des revendications précédentes, la distribution de modulations actives étant déterminée pour plusieurs cellules.

13. Dispositif selon l'une des revendications précédentes, les moyens (113) pour déterminer la distribution de modulations actives pouvant être employés pour déterminer la distribution de modulations actives en réponse à un nombre de communications actives qui emploient chaque système de modulation soutenu.

14. Dispositif selon l'une des revendications précédentes, la distribution de modulations actives comprenant plusieurs catégories de systèmes de modulation et une indication d'un niveau d'usage actuel des systèmes de modulation de chaque catégorie.

15. Dispositif selon l'une des revendications précédentes, le critère de sélection de cellule étant un critère de sélection de cellule en mode inactif.

16. Dispositif selon l'une des revendications précédentes, le critère de sélection de cellule étant un critère de transfert.

17. Dispositif selon l'une des revendications précédentes, le système de communication cellulaire comportant des moyens de communication EDGE.

18. Station de base pour un système de communication cellulaire, comportant un dispositif selon l'une des revendications précédentes 1 à 17.

19. Système de communication cellulaire, comportant un premier dispositif selon l'une des revendications précédentes 1 à 17.

20. Système de communication cellulaire selon la revendication 19, le système de communication cellulaire comportant un deuxième dispositif selon l'une de revendications précédentes 1 à 18, le premier et le deuxième dispositif comportant en plus des moyens pour échanger des informations de distribution de systèmes de modulation.

21. Procédé pour commander la sélection de cellule dans un système de communication cellulaire convenant à plusieurs systèmes de modulation, le procédé comportant les étapes suivantes:
détermination d'une distribution de modulations actives pour plusieurs voies de communication d'au moins une cellule, la distribution de modulations actives reflétant quels systèmes de modulation sont actuellement actifs ou quels systèmes de modulation sont affectés à des créneaux temporels différents, à des voies différentes et/ou à des porteuses différentes; et
modification d'un critère de sélection de cellule en réponse à une caractéristique de puissance associée avec chaque système de modulation de la distribution de modulations actives.

22. Programme d'ordinateur comprenant des moyens de code de programme d'ordinateur convenant à effectuer les étapes du procédé selon la revendication 21 lorsque ledit programme est exécuté sur un ordinateur.

23. Medium porteur portant le programme d'ordinateur exécutable selon la revendication 22.
